(19) Europäisches Patentamt
European Patent Office
Office européen des brevets

(11) EP 1 765 924 B1

(12) **FASCICULE DE BREVET EUROPEEN**

(45) Date de publication et mention de la délivrance du brevet:
**20.02.2008 Bulletin 2008/08**

(21) Numéro de dépôt: **05763734.0**

(22) Date de dépôt: **06.07.2005**

(51) Int Cl.:
***C08K 3/22*** *(2006.01)* ***C08K 9/06*** *(2006.01)*

(86) Numéro de dépôt international:
**PCT/EP2005/007281**

(87) Numéro de publication internationale:
**WO 2006/002993 (12.01.2006 Gazette 2006/02)**

(54) **COMPOSITION DE CAOUTCHOUC POUR PNEUMATIQUE A BASE D'UN HYDROXYDE METALLIQUE RENFORÇANT**

KATUSCHUKZUSAMMENSETZUNG FÜR EINEN REIFEN AUF BASIS EINES VERSTÄRKENDEN METALLHYDROXIDS

RUBBER COMPOSITION FOR A TYRE, BASED ON A REINFORCING METALLIC HYDROXIDE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.07.2004 FR 0407667**

(43) Date de publication de la demande:
**28.03.2007 Bulletin 2007/13**

(73) Titulaires:
- **Société de Technologie Michelin**
  **63000 Clermont-Ferrand (FR)**
- **Michelin Recherche et Technique S.A.**
  **1763 Granges-Paccot (CH)**

(72) Inventeurs:
- **LAPRA, Arnaud**
  **F-63100 Clermont-Ferrand (FR)**
- **VARAGNIAT, Franck**
  **F-63122 Ceyrat (FR)**
- **VEYLAND, Anne**
  **F-63200 Marsat (FR)**

(74) Mandataire: **Ribière, Joel et al**
**M.F.P. Michelin,**
**SGD/LG/PI - F35 - Ladoux**
**63040 Clermont-Ferrand Cedex 9 (FR)**

(56) Documents cités:
**EP-A- 0 807 603** **WO-A-99/28376**

- **DATABASE WPI Section Ch, Week 200113 Derwent Publications Ltd., London, GB; Class A11, AN 2001-115209 XP002322744 & JP 2000 302914 A (OHTSU TIRE & RUBBER CO LTD) 31 octobre 2000 (2000-10-31)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 765 924 B1

## Description

La présente invention est relative aux compositions de caoutchoucs diéniques utilisables pour la fabrication de pneumatiques ou de produits semi-finis pour pneumatiques, en particulier de bandes de roulement de ces pneumatiques, ainsi qu'aux charges inorganiques renforçantes susceptibles de renforcer de telles compositions de caoutchouc.

De façon à réduire la consommation de carburant et les nuisances émises par les véhicules à moteur, des efforts importants ont été réalisés par les concepteurs de pneumatiques afin d'obtenir des pneumatiques présentant à la fois une très faible résistance au roulement, une adhérence améliorée tant sur sol sec que sur sol humide ou enneigé, ainsi qu'une bonne résistance à l'usure.

De nombreuses solutions ont notamment été proposées dans le passé pour abaisser la résistance au roulement et améliorer l'adhérence des pneumatiques, mais celles-ci se traduisent en général par une déchéance très importante de la résistance à l'usure.

Il est bien connu notamment que l'incorporation de charges blanches conventionnelles comme par exemple des silices ou alumines conventionnelles, de la craie, du talc, des aluminosilicates naturels tels que bentonite ou le kaolin, dans des compositions de caoutchouc utilisées pour la fabrication de pneumatiques et notamment de bandes de roulement, se traduit certes par un abaissement de la résistance au roulement et par une amélioration de l'adhérence sur sol mouillé, enneigé ou verglacé, mais aussi par une déchéance inacceptable de la résistance à l'usure liée au fait que ces charges blanches conventionnelles n'ont pas de capacité de renforcement suffisante vis-à-vis de telles compositions de caoutchouc. On qualifie généralement ces charges blanches, pour cette raison, de charges non renforçantes encore appelées charges inertes.

Une solution efficace à ce problème de résistance à l'usure insuffisante a été trouvée grâce à la mise au point, au cours des dix dernières années, de nouvelles compositions de caoutchouc comportant des charges inorganiques véritablement renforçantes, en particulier des silices hautement dispersibles dites "HDS" (pour *"Highly Dispersible Silica"),* qui se sont révélées capables de remplacer les noirs de carbone conventionnels pour pneumatiques.

Les compositions à base de silice HDS présentent toutefois l'inconvénient connu de présenter une cinétique de vulcanisation sensiblement ralentie, en règle générale d'un facteur deux à trois, par rapport aux compositions conventionnelles chargées de noir de carbone. Les durées de cuisson plus longues qui en résultent pénalisent, on le sait, la mise en oeuvre industrielle des pneumatiques ou bandes de roulement de pneumatiques à base de telles compositions.

Or, les Demanderesses ont découvert lors de leurs recherches qu'il existe d'autres types de charge inorganique renforçante, en l'occurrence des hydroxydes métalliques spécifiques, du type synthétiques, qui eux aussi peuvent être utilisés dans les compositions de caoutchouc comme de véritables charges renforçantes, c'est-à-dire capables de remplacer des noirs de carbone conventionnels pour pneumatiques comme des silices HDS.

De manière inattendue, ces hydroxydes métalliques de synthèse spécifiques offrent non seulement une excellente capacité de renforcement aux compositions de caoutchouc les contenant, grâce à une aptitude à la dispersion élevée, proche de celles disponibles avec des silices type HDS, mais encore une cinétique de vulcanisation améliorée comparativement à l'emploi de telles silices.

En conséquence, un premier objet de l'invention concerne une composition de caoutchouc à base d'au moins un élastomère diénique, une charge renforçante et un agent de couplage, caractérisée en ce que ladite charge comporte au moins un hydroxyde métallique de synthèse recouvert de silice, le métal de l'hydroxyde étant choisi dans le groupe constitué par Al, Fe, Mg et les mélanges de ces métaux.

Cet hydroxyde métallique est de préférence constitué d'agrégats (ou particules secondaires) ayant une forme anisométrique, ce qui peut conférer aux compositions de l'invention une anisotropie de propriétés intéressante pour certaines applications.

L'invention a également pour objet l'utilisation à titre de charge renforçante, dans une composition de caoutchouc diénique, d'un hydroxyde métallique renforçant tel que défini ci-dessus.

L'invention a également pour objet un procédé d'obtention d'une composition de caoutchouc à cinétique de vulcanisation améliorée, utilisable pour la fabrication de pneumatiques, dans lequel on incorpore à au moins un élastomère diénique, au moins une charge inorganique renforçante et un agent de couplage assurant la liaison entre la charge inorganique renforçante et l'élastomère, ce procédé étant caractérisé en ce que ladite charge inorganique comporte un hydroxyde métallique "renforçant" (i.e., ayant toutes les caractéristiques précitées), et en ce qu'on malaxe thermomécaniquement le tout, en une ou plusieurs étapes, jusqu'à atteindre une température maximale comprise entre 110°C et 190°C.

L'invention a également pour objet l'utilisation d'une composition conforme à l'invention pour la fabrication d'articles finis ou produits semi-finis en caoutchouc, ainsi que ces articles finis et produits semi-finis eux-mêmes, comportant une composition de caoutchouc conforme à l'invention, ces articles ou produits étant notamment destinés à tout système de liaison au sol des véhicules automobiles, tels que pneumatiques, appuis internes de sécurité pour pneumatiques, roues, ressorts en caoutchouc, articulations élastomériques, autres éléments de suspension et anti-vibratoire.

L'invention a tout particulièrement pour objet l'utilisation d'une composition de caoutchouc conforme à l'invention

pour la fabrication de pneumatiques ou de produits semi-finis en caoutchouc destinés à ces pneumatiques, ces produits semi-finis étant notamment choisis dans le groupe constitué par les bandes de roulement, les sous-couches destinées par exemple à être placées sous ces bandes de roulement, les nappes sommet, les flancs, les nappes carcasse, les talons, les protecteurs, les chambres à air et les gommes intérieures étanches pour pneu sans chambre.

La composition conforme à l'invention est particulièrement adaptée à la fabrication de bandes de roulement de pneumatiques destinés à équiper des véhicules de tourisme, camionnettes, véhicules 4x4 (à 4 roues motrices), deux roues, "Poids-lourds" (c'est-à-dire métro, bus, engins de transport routier (camions, tracteurs, remorques), véhicules hors-la-route), avions, engins de génie civil, agraire, ou de manutention, ces bandes de roulement pouvant être utilisées lors de la fabrication de pneumatiques neufs ou pour le rechapage de pneumatiques usagés.

Des temps de cuisson réduits sont notamment avantageux pour les bandes de roulement destinées au rechapage, qu'il s'agisse de rechapage "à froid' (utilisation d'une bande de roulement précuite) ou de rechapage "à chaud" conventionnel (utilisation d'une bande de roulement à l'état cru). Dans ce dernier cas, une durée de cuisson réduite, outre le fait qu'elle diminue les coûts de production, limite la surcuisson (ou post-cuisson) imposée au reste de l'enveloppe (carcasse) du pneumatique usagé (déjà vulcanisé).

L'invention ainsi que ses avantages seront aisément compris à la lumière de la description et des exemples de réalisation qui suivent

## I. MESURES ET TESTS UTILISES

### I-1. Caractérisation des charges renforçantes

Les charges décrites ci-après consistent en des agglomérats de particules, susceptibles de se désagglomérer en ces particules sous l'effet d'une force externe, par exemple sous l'action d'un travail mécanique ou d'ultrasons. Le terme "particule" utilisé dans la présente demande doit être compris dans son sens générique habituel d'agrégat (encore appelé "particule secondaire"), et non dans celui de particule élémentaire (encore appelé "particule primaire") pouvant former, le cas échéant, une partie de cet agrégat ; par "agrégat", il faut entendre de manière connue l'ensemble insécable (i.e., qui ne peut être coupé, divisé, partagé) qui est produit lors de la synthèse de la charge, en général formé de particules élémentaires (primaires) agrégées entre elles.

Ces charges sont caractérisées comme indiqué ci-après.

a) surface spécifique BET:

La surface spécifique ("aire massique") BET est déterminée par adsorption de gaz à l'aide de la méthode de Brunauer-Emmett-Teller décrite dans "The Journal of the American Chemical Society" Vol. 60, page 309, février 1938), plus précisément selon la norme française NF ISO 9277 de décembre 1996 [méthode volumétrique multipoints (5. points) - gaz: azote - dégazage: 1heure à 160°C - domaine de pression relative *p*/*po* : 0.05 à 0.17].

b) taille moyenne des particules $d_w$ :

La taille moyenne (en masse) des particules, notée $d_w$, est mesurée de manière connue après dispersion aux ultrasons de la charge à analyser.

La mesure est réalisée au moyen d'un sédimentomètre centrifuge à détection optique type "DCP" ("Disc Centrifuge Photosedimentometer"), commercialisé par la société Brookhaven Instruments, utilisé notamment de manière connue pour la caractérisation de particules de noir de carbone. L'appareil est équipé d'une source LED émettant dans la bande spectrale comprise entre 600 et 700 nm.

Le mode opératoire est le suivant. On réalise une suspension de 20 à 200 mg d'échantillon de charge à analyser (de préférence, 20 mg si M = Fe ; 100 mg si M = A1; 200 mg si M = Mg) dans 40 mL de solution aqueuse contenant 12g/L d'hexamétaphosphate de sodium à titre de stabilisant de la suspension, par action durant 8 min, à 60% de puissance (60% de la position maxi du *"output control"),* d'une sonde ultrasons de 1500 W (sonificateur Vibracell 3/4 pouce commercialisé par la société Bioblock sous .la référence M75450). Pour limiter l'échauffement pendant la sonification, la suspension est placée de préférence dans un bain d'eau froide (par exemple à une température de 5 à 10°C). Après sonification, on introduit 15 mL de la suspension dans le disque en rotation. Après sédimentation pendant 120 min, la distribution en masse des tailles de particules est calculée par le logiciel du sédimentomètre "DCP" ; la moyenne en masse des tailles de particules , notée $d_W$, est calculée par le logiciel à partir de l'équation suivante (avec $n_i$ nombre d'objets dans la classe de diamètre di) :

$$d_w = \frac{\sum_{i=1}^{n} n_i d_i^4}{\sum_{i=1}^{n} n_i d_i^3}$$

Le calcul effectué par le logiciel utilise une correction optique spécifique tenant compte de l'indice de réfraction complexe du métal M de l'hydroxyde (n* = 1,65 + 0,1.i pour M=Al ; n* = 1,574 + 0,1.i pour M = Mg ; n* = 2,375 + 0,1.i pour M = Fe), de l'indice de réfraction du milieu de suspension et des caractéristiques spectrales du couple source/détecteur fournies par la société Brookhaven Instruments. L'indice de réfraction du milieu de suspension en fonction de la longueur d'onde de la source LED est obtenu de manière connue, par interpolation linéaire entre les valeurs d'indices de réfraction de l'eau à 20°C : 1,3322 à 620 nm et 1,3305 à 690 nm. Cette correction optique est générée au moyen du programme DCP_SCAT.exe de Brookhaven Instruments.

c) vitesse de désagglomération $\alpha$ :

La vitesse de désagglomération (notée $\alpha$) est mesurée au test dit "test de désagglomération aux ultrasons", à 70% de puissance d'une sonde de 600 W (watts), fonctionnant ici en mode pulsé (soit: 1 seconde ON, 1 seconde OFF) afin d'éviter un échauffement excessif de la sonde ultrasons durant la mesure. Ce test connu, faisant notamment l'objet de la demande de brevet WO99/28376 (voir également WO99/28380, WO00/73372, WO00/73373), permet de mesurer en continu l'évolution de la taille moyenne (én volume) des agglomérats de particules durant une sonification, selon les indications ci-après.

Le montage utilisé est constitué d'un granulomètre laser (type "Mastersizer S", commercialisé par Malvern Instruments - source laser He-Ne émettant dans le rouge, longueur d'onde 632,8 nm) et de son préparateur ("Malvern Small Sample Unit MSX1"), entre lesquels a été intercalée une cellule de traitement en flux continu (Bioblock M72410) munie d'une sonde ultrasons (Sonificateur 1/2 pouce type Vibracell de 600 W commercialisé par la société Bioblock).

Une faible quantité, généralement comprise entre 20 et 200 mg de charge à analyser (par exemple 40 mg pour M = Fe; 80 mg pour M = Al; 150 mg pour M= Mg) est introduite dans le préparateur avec 160 mL d'eau, la vitesse de circulation étant fixée à son maximum. Au moins trois mesures consécutives sont réalisées pour déterminer selon la méthode de calcul connue de Fraunhofer (matrice de calcul Malvern 3$$D) le diamètre initial moyen (en volume) des agglomérats, noté $d_v[0]$. La sonification (mode pulsé 1 s ON, 1 s OFF) est ensuite établie à une puissance de 70% (soit 70% de la position maxi du "tip amplitude") et on suit durant 8 min environ l'évolution du diamètre moyen en volume $d_v[t]$ en fonction du temps "t" à raison d'une mesure toutes les 10 secondes environ. Après une période d'induction (environ 3-4 min), il est observé que l'inverse du diamètre moyen en volume $1/d_v[t]$ varie linéairement, ou de manière sensiblement linéaire, avec le temps "t" (régime stable de désagglomération). La vitesse de désagglomération $\alpha$ est calculée par régression linéaire de la courbe d'évolution de $1/d_v[t]$ en fonction du temps "t", dans la zone de régime stable de désagglomération (en général, entre 4 et 8 min environ). Elle est exprimée en $\mu m^{-1}$/min.

La demande WO99/28376 précitée décrit en détail un dispositif de mesure utilisable pour la réalisation de ce test de désagglomération aux ultrasons. Ce dispositif, on le rappelle, consiste en un circuit fermé dans lequel peut circuler un flux d'agglomérats de particules en suspension dans un liquide. Ce dispositif comporte essentiellement un préparateur d'échantillon, un granulomètre laser et une cellule de traitement. Une mise à la pression atmosphérique, au niveau du préparateur d'échantillon et de la cellule de traitement elle-même, permet l'élimination en continu des bulles d'air qui se forment durant la sonification (action de la sonde ultrasons).

Le préparateur d'échantillon ("Malvern Small Sample Unit MSX1") est destiné à recevoir l'échantillon de charge à tester (en suspension dans son liquide) et à le faire circuler à travers le circuit à la vitesse préréglée (potentiomètre - vitesse maximum d'environ 3 L/min), sous la forme d'un flux de suspension liquide. Ce préparateur consiste simplement en une cuve de réception qui contient, et à travers laquelle circule la suspension à analyser. Il est équipé d'un moteur d'agitation, à vitesse modulable, afin d'éviter une sédimentation des agglomérats de particules de la suspension ; une mini-pompe centrifuge est destinée à assurer la circulation de la suspension dans le circuit ; l'entrée du préparateur est reliée à l'air libre via une ouverture destinée à recevoir l'échantillon de charge à tester et/ou le liquide utilisé pour la suspension.

Au préparateur est connecté un granulomètre laser ("Mastersizer S") dont la fonction est de mesurer en continu, à intervalles de temps réguliers, la taille moyenne en volume "$d_v$" des agglomérats, au passage du flux, grâce à une cellule de mesure à laquelle sont couplés les moyens d'enregistrement et de calcul automatiques du granulomètre. On rappelle ici brièvement que les granulomètres laser exploitent, de manière connue, le principe de la diffraction de la lumière par des objets solides mis en suspension dans un milieu dont l'indice de réfraction est différent de celui du

solide. Selon la théorie de Fraunhofer, il existe une relation entre la taille de l'objet et l'angle de diffraction de la lumière (plus l'objet est petit et plus l'angle de diffraction sera élevé). Pratiquement, il suffit de mesurer la quantité de lumière diffractée pour différents angles de diffraction pour pouvoir déterminer la distribution de taille (en volume) de l'échantillon, $d_v$ correspondant à la taille moyenne en volume de cette distribution ($d_v = \Sigma(n_i\ d_i^4) / \Sigma(n_i\ d_i^3)$ avec $n_i$ nombre d'objets de la classe de taille ou diamètre $d_i$).

Intercalée entre le préparateur et le granulomètre laser se trouve enfin une cellule de traitement équipée d'une sonde ultrasons, pouvant fonctionner en mode continu ou pulsé, destinée à casser en continu les agglomérats de particules au passage du flux. Ce flux est thermostaté par l'intermédiaire d'un circuit de refroidissement disposé, au niveau de la cellule, dans une double enveloppe entourant la sonde, la température étant contrôlée par exemple par une sonde de température plongeant dans le liquide au niveau du préparateur.

I-2. Caractérisation des compositions de caoutchouc

Les compositions de caoutchouc sont caractérisées, avant et après cuisson, comme indiqué ci-après.

a) essais de traction:

Ces essais permettent de déterminer les contraintes d'élasticité et les propriétés à la rupture. Sauf indication différente, ils sont effectués conformément à la norme française NF T 46-002 de septembre 1988. On mesure en première élongation (i.e., sans cycle d'accommodation - les modules sont alors notés "M") les modules sécants vrais (i.e., calculés en se ramenant à la section réelle de l'éprouvette), exprimés en MPa, à 100% d'allongement (modules notés M100), et à 300% d'allongement (modules notés M300).

On mesure également les contraintes à la rupture (en MPa) et les allongements à la rupture (en %). Toutes ces mesures de traction sont effectuées dans les conditions normales de température et d'hygrométrie ($23\pm2$°C ; $50\pm5$% d'humidité relative - norme française NF T 40-101 de décembre 1979).

b) propriétés dynamiques:

Les propriétés dynamiques sont mesurées sur un viscoanalyseur (Metravib VA4000), selon la norme ASTM D5992-96. On enregistre la réponse d'un échantillon de composition vulcanisée (éprouvette cylindrique de 2 mm d'épaisseur et de 315 $mm^2$ de section), soumis à une sollicitation sinusoïdale en cisaillement simple alterné, à la fréquence de 10Hz, à une température de 23°C. On effectue un balayage en amplitude de déformation crête-crête de 0,1% à 50% (cycle aller), puis de 50% à 0,1% (cycle retour); pour le cycle retour, on enregistre la valeur maximale du facteur de perte, notée $\tan(\delta)_{max}$.

c) rhéométrie:

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983). Ti (en min) est le délai d'induction, c'est-à-dire le temps nécessaire au début de la réaction de vulcanisation. On mesure également la constante de vitesse de conversion K (en $min^{-1}$) d'ordre 1, calculée entre 30% et 80% de conversion, qui permet d'apprécier la cinétique de vulcanisation (plus K est élevée, plus la cinétique est rapide).

**II. CONDITIONS DE REALISATION DE L'INVENTION**

Les compositions de caoutchouc selon l'invention sont à base des constituants suivants : (i) un (au moins un) élastomère diénique, (ii) une (au moins une) charge renforçante et (iii) un (au moins un) agent de couplage assurant la liaison entre cette charge et cet élastomère diénique, ladite charge comprenant un hydroxyde métallique renforçant tel que décrit en détail ci-après.

Bien entendu, par l'expression "composition à base de", il faut entendre une composition comportant le mélange et/ou le produit de réaction des différents constituants de base utilisés, certains de ces constituants pouvant réagir et/ou étant destinés à réagir entre eux, au moins partiellement, lors des différentes phases de fabrication de la composition, ou lors de sa cuisson ultérieure.

Dans la présente description, sauf indication expresse différente, tous les pourcentages (%) indiqués sont des % en masse.

II-1. Elastomère diénique

Par élastomère ou caoutchouc "diénique", on entend de manière connue un élastomère issu au moins en partie (i.e. un homopolymère ou un copolymère) de monomères diènes, c'est-à-dire de monomères porteurs de deux doubles liaisons carbone-carbone, conjuguées ou non.

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend en particulier par élastomère diénique susceptible d'être utilisé dans les compositions conformes à l'invention:

(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) tout copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) tout copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention, en particulier lorsque la composition de caoutchouc est destinée à une bande de roulement de pneumatique, est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di (alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et de 1 % à 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés et être préparés en dispersion ou en solution ; ils peuvent être couplés et/ou étoilés ou encore fonctionnalisés avec un agent de couplage et/ou d'étoilage ou de fonctionnalisation.

Conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65%, une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg, mesurée selon ASTM D3418) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10%

et 50%, et plus généralement tout copolymère butadiène-styrène-isoprène ayant une Tg comprise entre -20°C et -70°C.

En résumé, l'élastomère diénique de la composition conforme à l'invention est choisi préférentiellement dans le groupe des élastomères diéniques fortement insaturés constitué par les polybutadiènes (en abrégé "BR"), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

La composition conforme à l'invention est notamment destinée à une bande de roulement pour pneumatique, qu'il s'agisse d'un pneumatique neuf ou usagé (cas d'un rechapage).

Lorsque une telle bande de roulement est destinée notamment à un pneumatique tourisme, l'élastomère diénique est de préférence un SBR ou un coupage (mélange) SBR/BR, SBR/NR (ou SBR/IR), ou encore BR/NR (ou BR/IR). Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C, ce copolymère SBR, de préférence préparé en solution (SSBR), étant éventuellement utilisé en mélange avec un polybutadiène (BR) possédant de préférence plus de 90% de liaisons cis-1,4.

Selon un autre mode de réalisation particulier, l'élastomère diénique est majoritairement (pour plus de 50 pce) un élastomère isoprénique. C'est le cas en particulier lorsque les compositions de l'invention sont destinées à constituer, dans les pneumatiques, les matrices de caoutchouc de certaines bandes de roulement, par exemple pour véhicules industriels, de nappes d'armature de sommet (par exemple de nappes de travail, nappes de protection ou nappes de frettage), de nappes d'armature de carcasse, de flancs, de bourrelets, de protecteurs, de sous-couches, de blocs de caoutchouc et autres gommes internes assurant l'interface entre les zones précitées des pneumatiques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%, notamment supérieurs à 99%.

Selon un autre mode de réalisation avantageux de l'invention, notamment lorsqu'elle est destinée à un flanc de pneumatique, la composition conforme à l'invention peut contenir au moins un élastomère diénique essentiellement saturé, en particulier au moins un copolymère EPDM, que ce copolymère soit par exemple utilisé ou non en mélange avec un ou plusieurs des élastomères diéniques fortement insaturés cités précédemment.

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

II-2. Hydroxyde métallique renforçant

L'hydroxyde utilisé à titre de charge renforçante dans la composition de l'invention est une charge du type hybride ou composite, consistant en un hydroxyde métallique de synthèse recouvert de silice dont le métal M est choisi dans le groupe constitué par Al, Fe, Mg, et les mélanges de ces métaux. De préférence, M représente Al ou Mg.

De préférence, le taux de silice présent à la surface de cet hydroxyde métallique représente entre 5% et 50%, plus préférentiellement entre 10% et 40%, en particulier entre 15% et 35% (% en poids du poids total d'hydroxyde revêtu).

Par hydroxyde métallique, on doit entendre tout hydroxyde y compris oxyde-hydroxyde desdits métaux ou mélange de métaux, quelle que soit sa forme, cristalline ou amorphe, anhydre ou hydratée, et la nature de ses éventuelles impuretés.

Pour un compromis optimisé quant à la processabilité des compositions, leurs propriétés d'hystérèse, de renforcement et de résistance à l'usure, en particulier en pneumatique, la surface spécifique BET de cet hydroxyde métallique renforçant est de préférence comprise entre 50 et 700 $m^2/cm^3$, plus préférentiellement comprise entre 100 et 600 $m^2/cm^3$ (par exemple entre 200 et 500 $m^2/cm^3$) ; sa taille moyenne en masse de particules, notée $d_W$, est de préférence comprise entre 20 et 400 nm, plus préférentiellement comprise entre 50 et 300 nm (par exemple comprise entre 100 et 200 nm).

D'autre part, la dispersibilité intrinsèque d'une charge peut être évaluée de manière connue à l'aide du test de désagglomération aux ultrasons décrit au chapitre 1 précédent. De préférence, l'hydroxyde métallique renforçant présente une vitesse de désagglomération $\alpha$ supérieure à $1.10^{-3}$ $\mu m^{-1}/min$, plus préférentiellement supérieure à $4.10^{-3}$

$\mu m^{-1}$/min.

L'état physique sous lequel peut se présenter l'hydroxyde métallique renforçant est indifférent, que ce soit sous forme de poudre, de microperles, de granulés, de pellets, de billes ou toute autre forme densifiée, à la condition bien évidemment que le mode de densification n'altère pas les caractéristiques essentielles ou préférentielles préconisées pour cette charge.

Selon un mode préférentiel de réalisation de l'invention, l'hydroxyde métallique utilisé est constitué d'agrégats (plus ou moins agglomérés entre eux) ayant une forme anisométrique, c'est-à-dire présentant un rapport de forme ($F_1 = L_1/E_1$) supérieur à 2,0, plus préférentiellement supérieur à 3,0, $L_1$ représentant la longueur (ou plus grande dimension) et $E_1$ l'épaisseur (ou plus petite dimension, par exemple le diamètre) moyennes desdits agrégats, ces moyennes étant calculées en nombre. Plus préférentiellement encore, $F_1$ est compris entre 3 et 10.

Selon un autre mode préférentiel, de préférence combiné au précédent, ce sont les particules primaires elles-mêmes, constitutives des agrégats, qui sont anisométriques, par exemple en forme de bâtonnets, lesdites particules primaires ayant un rapport de forme ($F_2 = L_2/E_2$) supérieur à 2,0, plus préférentiellement supérieur à 3,0, $L_2$ représentant la longueur (ou plus grande dimension) et $E_2$ l'épaisseur (ou plus petite dimension, par exemple le diamètre) moyennes desdites particules primaires, ces moyennes étant calculées en nombre. Plus préférentiellement encore, $F_2$ est compris entre 3 et 20.

Dans un tel cas, $L_2$ est de préférence comprise entre 10 et 400 nm et $E_2$ est de préférence comprise entre 5 et 25 nm. Plus préférentiellement, $L_2$ est comprise dans un domaine de 20 à 100 nm, et $E_2$ est comprise dans un domaine de 10 à 20 nm.

L'hydroxyde métallique renforçant est susceptible d'être préparé par tout procédé connu de revêtement ("coating") d'une charge minérale ou organique par de la silice, appliqué dans le cas présent à un hydroxyde métallique de synthèse dont le métal M est choisi dans le groupe constitué par Al, Fe, Mg et les mélanges de ces métaux.

Selon un mode préférentiel, un tel procédé de revêtement comporte les étapes suivantes :

- partir d'une suspension d'hydroxyde du métal M dans l'eau ou tout solvant approprié pour la synthèse de la silice ;
- réaliser la synthèse de silice sur la surface des particules d'hydroxyde ;
- filtrer la suspension obtenue, laver le filtrat et sécher.

Dans un tel procédé, la concentration de la suspension en hydroxyde de métal M est de préférence inférieure à 20 g/l, plus préférentiellement inférieure à 10 g/l (par exemple de l'ordre de 5 g/l). Le lavage du filtrat est opéré en une ou plusieurs fois dans l'eau ou le solvant utilisé pour la synthèse de la silice, étant précisé que la dernière opération de lavage est effectuée de préférence dans l'eau.

On sèche ensuite le filtrat ainsi obtenu avec un moyen de séchage apte à limiter l'agglomération des particules d'hydroxyde lors de l'élimination de l'eau. Les moyens de séchage utilisables sont connus de l'homme du métier : on peut procéder par exemple par cryolyophilisation, par atomisation, ou sous conditions super-critiques, ou utiliser tout autre moyen équivalent apte à éviter une agglomération excessive, par capillarité, des particules d'hydroxyde lors de l'élimination de l'eau.

A titre d'exemples, peut être utilisé un procédé de revêtement s'inspirant d'au moins une des méthodes connues suivantes :

- méthode de recouvrement des particules par hydrolyse du tétraéthylorthosilicate (TEOS) dans l'alcool (M.Ohmori et E.Matijevic, J. colloid inter. Sci. 160, 288-292 (1993)), méthode dérivant elle-même du procédé connu de synthèse de silice sous le nom de voie "Stoeber" (W. Stoeber, A. Fink, E. Bohm, J. Colloid Inter. Sci. 26, 62-69 (1968)) ;
- méthode de synthèse de silice à partir d'un précurseur silicate de sodium ($Na_2SiO_3$) comme décrit par exemple dans la demande de brevet EP-A-0 407 262 ;
- méthode de recouvrement de noir de carbone par de la silice comme décrit dans les exemples 1 et 2 de la demande de brevet WO00/05312.

Il est à noter que si l'on synthétise l'hydroxyde métallique de départ, il est préférable de ne pas sécher ses particules avant de mettre en oeuvre le procédé de revêtement ci-dessus, de manière à limiter autant que possible le risque d'agglomération des particules entre elles avant dépôt de la couche superficielle de silice.

L'hydroxyde métallique renforçant décrit ci-dessus peut constituer la totalité ou une partie seulement de la charge renforçante totale, dans ce dernier cas associé par exemple à une autre charge inorganique renforçante telle qu'une silice, notamment HDS, ou à du noir de carbone conventionnel.

De préférence, l'hydroxyde métallique renforçant constitue la majorité, c'est-à-dire plus de 50% en poids de la charge renforçante totale. Avantageusement, il représente plus de 80%, encore plus préférentiellement plus de 90% de la charge renforçante totale. Il peut avantageusement constituer 100% de la charge inorganique renforçante, associé ou non à du noir de carbone comme indiqué ci-après.

Par charge inorganique renforçante, on entend ici une charge inorganique ou minérale, quelles que soient sa couleur et son origine (naturelle ou de synthèse), encore appelée charge "blanche", charge "claire" ou encore charge "non-noire" *("non-black filler")* par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Comme charges inorganiques renforçantes complémentaires possibles conviennent notamment des charges minérales du type siliceuse, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titres de silices précipitées hautement dispersibles (HDS), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber. Comme exemples d'alumines renforçantes, on peut citer les alumines "Baikalox" "A125" ou "CR125" de la société Baïkowski, "APA-100RDX" de Condea, "Aluminoxid C" de Degussa ou "AKP-G015" de Sumitomo Chemicals.

L'hydroxyde métallique renforçant peut être utilisé également associé à un noir de carbone, par exemple un noir du type HAF, ISAF, SAF, conventionnellement utilisé dans les pneumatiques et particulièrement dans les bandes de roulement des pneumatiques (par exemple noirs N115, N134, N234, N326, N330, N339, N347, N375, ou encore, selon les applications visées, les noirs de séries plus élevées, par exemple N660, N683, N772).

La quantité de noir de carbone présente dans la charge renforçante totale peut varier dans de larges limites, elle est de préférence inférieure à celle de l'hydroxyde métallique renforçant. Avantageusement, on utilise du noir de carbone en très faible proportion, à un taux préférentiel inférieur à 10 pce, plus préférentiellement inférieur à 6 pce, par exemple entre 0 et 3 pce (parties en poids pour cent parties d'élastomère). Dans les intervalles indiqués, on bénéficie des propriétés colorantes (agent de pigmentation noire) et anti-UV des noirs de carbone, sans pénaliser par ailleurs les performances typiques apportées par l'hydroxyde métallique renforçant.

De manière préférentielle, le taux de charge renforçante totale dans les compositions de l'invention est compris dans un domaine allant de 20 à 400 pce, plus préférentiellement de 30 à 200 pce.

Lorsque les compositions de l'invention sont destinées à des pneumatiques, notamment à des bandes de roulement de pneumatiques, le taux d'hydroxyde métallique renforçant est de préférence supérieur à 50 pce, plus préférentiellement compris entre 50 et 150 pce.

A la charge renforçante précédemment décrite peuvent être également ajoutés, selon l'application visée, des charges inertes (non renforçantes) telles que particules d'argile, bentonite, talc, craie, kaolin, utilisables par exemple dans des flancs ou des bandes de roulement de pneumatique colorés.

II-3. Agent de couplage

Il est bien connu de l'homme du métier qu'il est nécessaire d'utiliser, dans le cas d'une charge inorganique renforçante, un agent de couplage encore appelé agent de liaison qui a pour fonction d'assurer la liaison ou "couplage" entre la charge inorganique et l'élastomère, tout en facilitant la dispersion de cette charge inorganique au sein de la matrice élastomérique.

L'hydroxyde métallique renforçant nécessite lui aussi l'emploi d'un tel agent de couplage pour assurer sa fonction de charge renforçante dans les compositions de caoutchouc conformes à l'invention.

Par agent de couplage, on entend plus précisément un agent apte à établir une connexion suffisante, de nature chimique et/ou physique, entre la charge considérée et l'élastomère ; un tel agent de couplage, au moins bifonctionnel, a par exemple comme formule générale simplifiée " Y-T-X ", dans laquelle :

- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique ;
- X représente un groupe fonctionnel (fonction "X") capable de se lier physiquement et/ou chimiquement à l'élastomère, par exemple par l'intermédiaire d'un atome de soufre ;
- T représente un groupe permettant de relier Y et X.

Les agents de couplage ne doivent en particulier pas être confondus avec de simples agents de recouvrement de la charge considérée qui, de manière connue, peuvent comporter la fonction Y active vis-à-vis de la charge mais sont dépourvus de la fonction X active vis-à-vis de l'élastomère.

De tels agents de couplage, d'efficacité variable, ont été décrits dans un très grand nombre de documents et sont bien connus de l'homme du métier. On peut utiliser en fait tout agent de couplage susceptible d'assurer efficacement

la liaison ou couplage entre une charge inorganique renforçante telle que silice et un élastomère diénique, comme par exemple un organosilane, notamment un alkoxysilane sulfuré, ou encore un polyorganosiloxane au moins bifonctionnel (porteur des fonctions X et Y précitées).

Des agents de couplage silice/élastomère, notamment, ont été décrits dans un grand nombre de documents, les plus connus étant des alkoxysilanes bifonctionnels tels que des alkoxysilanes sulfurés. On utilise en particulier des alkoxysilanes sulfurés, dits "symétriques" ou "asymétriques" selon leur structure particulière, tels que décrits par exemple dans les demandes de brevet ou brevets US-A-3 842 111, US-A-3 873 489, US-A-3 978 103, US-A-3 997 581, US-A-4 002 594, US-A-4 072 701, US-A-4 129 585, ou dans les documents plus récents US-A-5 580 919, US-A-5 583 245, US-A-5 650 457, US-A-5 663 358, US-A-5 663 395, US-A-5 663 396, US-A-5 674 932, US-A-5 675 014, US-A-5 684 171, US-A-5 684 172, US-A-5 696 197, US-A-5 708 053, US-A-5 892 085, WO 02/083782 ou qui énoncent en détail de tels composés connus.

Conviennent en particulier pour la mise en oeuvre de l'invention, sans que la définition ci-après soit limitative, des alkoxysilanes polysulfurés symétriques répondant à la formule générale (I) suivante:

$$Z - A - S_n - A - Z, \qquad (I)$$

dans laquelle:

- n est un entier de 2 à 8 (de préférence de 2 à 5);
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$ en particulier le propylène);
- Z répond à l'une des formules ci-après:

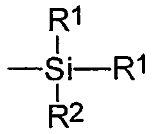 ; 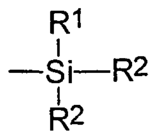 ; 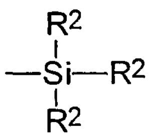 ,

dans lesquelles:
- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence des groupes alkoxyle en $C_1$-$C_8$ ou cycloalkoxyle en $C_5$-$C_8$, plus préférentiellement des groupes alkoxyle en $C_1$-$C_4$, en particulier le méthoxyle et/ou l'éthoxyle).

Dans le cas d'un mélange d'alkoxysilanes polysulfurés répondant à la formule (I) ci-dessus, notamment des mélanges usuels disponibles commercialement, la valeur moyenne des "n" est un nombre fractionnaire de préférence compris entre 2 et 5, plus préférentiellement proche de 4. Mais l'invention peut être aussi avantageusement mise en oeuvre par exemple avec des alkoxysilanes disulfurés (n = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl) tels que le tétrasulfure de bis(3-tri-éthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$.

Le TESPD est commercialisé par exemple par la société Degussa sous la dénomination Si75 (sous forme d'un mélange de disulfure - à 75% en poids - et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n qui est proche de 4).

On citera également comme agents de couplage préférentiels les polysulfures (notamment disulfures, trisulfures ou tétrasulfures) de bis-(monoalkoxyl($C_1$-$C_4$)-dialkyl($C_1$-$C_4$)silyl-propyl), plus particulièrement le tétrasulfure de bis-monoéthoxydiméthylsilylpropyl tel que décrit dans la demande WO 02/083782.

A titre d'exemples d'agents de couplage autres que les alkoxysilanes polysulfurés précités, on citera notamment des polyorganosiloxanes bifonctionnels tels que décrits par exemple dans les demandes WO 99/02602 ou WO 01/96442,

ou encore les polysulfures d'hydroxysilane tels que décrits dans les demandes WO 02/30939 et WO 02/31041.

L'homme du métier saura ajuster la teneur en agent de couplage dans les compositions de l'invention, en fonction de l'application visée, de la nature de l'élastomère utilisé et de la quantité d'hydroxyde métallique renforçant, complété le cas échéant de toute autre charge inorganique employée à titre de charge renforçante complémentaire.

Le taux d'agent de couplage, ramené au poids d'élastomère diénique, est de préférence compris entre 0,1 et 15 pce, plus préférentiellement compris entre 0,5 et 10 pce.

L'agent de couplage utilisé pourrait être préalablement greffé (via la fonction "X") sur l'élastomère diénique de la composition de l'invention, l'élastomère ainsi fonctionnalisé ou "précouplé" comportant alors la fonction "Y" libre pour l'hydroxyde métallique renforçant. L'agent de couplage pourrait également être préalablement greffé (via la fonction "Y") sur l'hydroxyde métallique renforçant, la charge ainsi "précouplée" pouvant ensuite être liée à l'élastomère diénique par l'intermédiaire des fonctions libres "X". On préfère toutefois utiliser l'agent de couplage à l'état libre (i.e., non greffé) ou greffé sur l'hydroxyde métallique renforçant, notamment pour des raisons de meilleure processabilité des compositions à l'état cru.

II-4. Additifs divers

Les compositions conformes à l'invention peuvent contenir, outre les composés déjà décrits, les additifs habituellement utilisés dans les compositions de caoutchouc diénique destinées à la fabrication de systèmes de liaison au sol des véhicules automobiles, en particulier de pneumatiques, comme par exemple des plastifiants ou des huiles d'extension que ces derniers soient de nature aromatique ou non-aromatique, notamment des huiles très faiblement ou non aromatiques (e.g., huiles naphténiques ou paraffiniques, huiles MES ou TDAE) et/ou des résines plastifiantes hydrocarbonées à haute Tg (de préférence supérieure à 30°C), des pigments, des agents de protection du type antioxydants, antiozonants, des agents anti-fatigue, des activateurs de couplage, des accepteurs et donneurs de méthylène, bismaléimides ou autres résines renforçantes tels que décrits par exemple dans WO02/10269, un système de réticulation à base soit de soufre, soit de donneurs de soufre et/ou de peroxyde, des accélérateurs de vulcanisation, des activateurs de vulcanisation, des systèmes promoteurs d'adhésion du caoutchouc au métal ou au textile, des agents antiréversion tels que par exemple l'hexathiosulfonate de sodium ou le N,N'-m-phénylène-biscitraconimide, etc. L'homme du métier saura ajuster la formulation de la composition en fonction de ses besoins particuliers.

Les compositions de caoutchouc conformes à l'invention peuvent également contenir, en complément des agents de couplage précités, des agents de recouvrement (comportant par exemple la seule fonction Y) de l'hydroxyde métallique renforçant ou plus généralement des agents d'aide à la mise en oeuvre susceptibles, grâce à une amélioration de la dispersion de la charge dans la matrice de caoutchouc et à un abaissement de la viscosité des compositions, d'améliorer leur processabilité à l'état cru, ces agents, utilisés par exemple à un taux préférentiel compris entre 0,5 et 3 pce, étant par exemple des alkylalkoxysilanes (notamment des alkyltriéthoxysilanes comme par exemple le 1-octyltriéthoxysilane commercialisé par la société Degussa-Hüls sous la dénomination Dynasylan Octeo ou le 1-hexa-décyltriéthoxysilane commercialisé par la société Degussa-Hüls sous la dénomination Si216), des polyols, des polyéthers (par exemple des polyéthylèneglycols), des amines primaires, secondaires ou tertiaires (par exemple des trialcanolamines), des polyorganosiloxanes hydroxylés ou hydrolysables, par exemple des $\alpha,\omega$-dihydroxy-polyorganosiloxanes (notamment des $\alpha,\omega$-dihydroxy-polydiméthylsiloxanes).

II-5. Préparation des compositions de caoutchouc

Les compositions sont fabriquées dans des mélangeurs appropriés, en utilisant deux phases de préparation successives bien connues de l'homme du métier : une première phase de travail ou malaxage thermo-mécanique (phase dite "non-productive") à haute température, jusqu'à une température maximale (notée $T_{max}$) comprise entre 110°C et 190°C, de préférence entre 130°C et 180°C, suivie d'une seconde phase de travail mécanique (phase dite "productive") à plus basse température, typiquement inférieure à 110°C, par exemple entre 60°C et 100°C, phase de finition au cours de laquelle est incorporé le système de réticulation ou vulcanisation.

Le procédé de fabrication selon l'invention est caractérisé en ce qu'au moins la charge renforçante et l'agent de couplage sont incorporés par malaxage à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale comprise entre 110°C et 190°C, de préférence comprise entre 130°C et 180°C.

A titre d'exemple, la première phase (non-productive) est conduite en une seule étape thermomécanique au cours de laquelle on introduit, dans un mélangeur approprié tel qu'un mélangeur interne usuel, tous les constituants de base nécessaires, les éventuels agents de recouvrement ou de mise en oeuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu, on incorpore alors le système

de vulcanisation à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis tels que des bandes de roulement, des nappes sommet, des flancs, des nappes carcasse, des talons, des protecteurs, des chambres à air ou des gommes intérieures étanches pour pneu sans chambre.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

Le système de vulcanisation proprement dit est préférentiellement à base de soufre et d'un accélérateur primaire de vulcanisation, en particulier d'un accélérateur du type sulfénamide. A ce système de vulcanisation de base peuvent venir s'ajouter, incorporés au cours de la première phase non-productive et/ou au cours de la phase productive, divers accélérateurs secondaires ou activateurs de vulcanisation connus tels que par exemple oxyde de zinc, acide stéarique, dérivés guanidiques, etc. Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique. L'accélérateur primaire de vulcanisation est utilisé à un taux préférentiel compris entre 0,5 et 10 pce, plus préférentiellement compris entre 0,5 et 5,0 pce en particulier lorsque l'invention s'applique à une bande de roulement de pneumatique.

Il va de soi que l'invention concerne les compositions de caoutchouc précédemment décrites tant à l'état dit "cru" (i.e., avant cuisson) qu'à l'état dit "cuit" ou vulcanisé (i.e., après réticulation ou vulcanisation).

Les compositions conformes à l'invention peuvent être utilisées seules ou en mélange avec toute autre composition de caoutchouc utilisable pour la fabrication de pneumatiques.

## III. EXEMPLES DE REALISATION DE L'INVENTION

III-1. Synthèse de l'hydroxyde métallique renforçant

Matériel utilisé :

- réacteur de 5 litres double enveloppe ;
- moteur d'agitation (Heidolf) ;
- bain thermostaté ;
- essoreuse centrifugeuse (Rousselet - type RC30VxR) ;
- lyophilisateur (Christ Gamma 2-20) ;
- sonde ultrasons 1500W.

Précurseurs utilisés :

- éthanol absolu (Prolabo - Réf. 20821.296) ;
- hydroxyde d'ammonium $NH_4OH$ (Fluka - Réf. 09860) ;
- tétraethoxyorthosilicate (TEOS) (Aldrich - Réf. 13190-2) ;
- hydroxyde d'aluminium AlOOH (boehmite à morphologie bâtonnets) ;
- eau bi-déminéralisée ;

Mode opératoire :

L'hydroxyde métallique de départ (charge référencée "B" dans les essais qui suivent) est un oxyde-hydroxyde d'aluminium (AlOOH - forme cristalline "boehmite") dont les particules secondaires (agrégats) sont formées de particules primaires en forme de bâtonnets de facteur de forme $F_2$ égal à 4 environ ($L_2$ = 40 nm et $E_2$ = 10 nm) ; ces particules secondaires ont les propriétés de densité et de surface BET indiquées dans le tableau 1 annexé.

Il a été synthétisé selon le mode opératoire connu décrit dans « Nanostructured ceramic powders by hydrothermal synthesis and their application », C. Kaya et al, Microporous and Mesoporous Materials, 54, pp. 37-49, 2002,

à partir d'un précurseur diacétate d'hydroxyaluminium $(CH3COO)_2Al(OH)$, dans une solution aqueuse d'acide acétique sous pression et température élevées (environ 200°C).

Les particules de charge B sont ensuite recouvertes par des couches uniformes de silice grâce à l'hydrolyse du tétraéthylorthosilicate (TEOS) dans l'éthanol selon la voie "Stoeber".

De manière détaillée, on a procédé comme suit : dans un réacteur de 5 L (litres), muni d'une double enveloppe, 4,47 L d'éthanol sont introduits. La température du milieu est régulée à 40°C par un bain thermostaté relié à la double enveloppe. L'homogénéisation du milieu réactionnel est assurée par une pale Téflon® à six pans; couplée à un moteur tournant à une vitesse de 300 tours/min. Un volume de 168,6 mL d'hydroxyde d'ammonium à 12 M est ensuite ajouté, et 73,2 mL d'eau bidéminéralisée. Le mélange est alors maintenu sous agitation pendant 30 min à 40°C. Une suspension de 25 g d'AlOOH dans 200 mL d'éthanol est alors introduite. Cette suspension est incorporée après avoir été ultrasonifiée à l'aide d'une sonde 1500 W utilisée à 100% de puissance pendant 30 min. Puis 93 mL de tétraéthoxyorthosilicate à 4,47 M sont ajoutés rapidement. Le milieu réactionnel est maintenu sous agitation à une température de 40°C pendant une heure. Le produit est introduit dans l'essoreuse par l'intermédiaire d'une pompe péristaltique à un débit de 30 mL/min afin d'être essoré (vitesse de rotation de l'essoreuse : 600 t/min) puis lavé avec 1 L d'éthanol et 12 L d'eau (débit de la pompe péristaltique : 100 mL/min ; vitesse de rotation de l'essoreuse : 1000 t/min). Il est ensuite séché par lyophilisation selon les conditions suivantes : 48 heures de séchage principal ("main drying") à -15°C et 1,030 mbar ; puis 12 heures de séchage final ("final drying") à 0°C et sous un vide dynamique. Le produit est enfin tamisé (< 400$\mu$m).

27 g de particules de AlOOH recouvertes de $SiO_2$ sont ainsi obtenus. Cette charge, référencée charge C dans les essais qui suivent, a les propriétés de densité et de surface BET indiquées dans le tableau 1. Caractérisées au MET (microscope électronique à transmission), ces particules se présentent sous forme d'agrégats de particules primaires en forme de bâtonnets, lesdits bâtonnets ayant une longueur moyenne $L_2$ de l'ordre de 40-50 nm et une épaisseur moyenne $E_2$ d'environ 10-15 nm ; leur facteur de forme $F_2$ est donc égal à 4 environ.

Pour la caractérisation par MET, on a appliqué à titre d'exemple le mode opératoire qui suit : une prise d'essai de 12 mg de charge a été dispersée avec une sonde ultrasons dans de l'isopropanol. Une goutte de la suspension a été déposée sur une première grille de nickel recouverte d'une membrane pleine de carbone ("formvar"), puis sur une deuxième grille en cuivre recouverte d'une membrane de carbone à trous. Les observations ont été effectuées sur un MET de marque Philipps (réf. CM 200) fonctionnant sous une tension de 200 kV et équipé d'une caméra ("Megaview").

Un diffractogramme de rayons X (générateur à anode tournante Rigaku - RU300 ; tube Cu ; $\lambda$ = 1,5418 Å; P 40kV*200 mA ; filtre de Ni) révèle la présence de la phase prédominante de boehmite et d'un halo amorphe de silice. L'analyse par fluorescence X (spectromètre Philipps "PW1400" à dispersion de $\lambda$ et tube à anode de Sc), réalisée sur un échantillon contenant quelques mg de poudre est compacté sous 10 T de pression avec de l'acide borique afin de former une pastille, donne un pourcentage massique de silice de l'ordre de 20%.

Enfin, une analyse RMN permet aisément de vérifier que la couche de silice est bien fixée solidement à l'hydroxyde métallique, par l'intermédiaire de liaisons covalentes. Les spectres RMN sont obtenus de manière connue, sur un spectromètre Bruker ASX 200 MHz, équipé d'un aimant supraconducteur de 4,7 Teslas (fréquence de Larmor du Silicium égale à 39,76 MHz). Pour acquérir le signal, les échantillons sous forme de poudre, sont placés dans un porte-échantillon cylindrique en oxyde de zirconium (rotor) d'environ 0,3 $cm^3$, qui tourne à l'angle magique à une fréquence de 4KHz. Pendant l'observation de ce signal, le découplage haute puissance est employé pour moyenner à zéro les interactions protons-Silicium. Le spectre CPMAS montre un épaulement à -80 ppm non caractéristique de la silice, provenant de la liaison covalente Si-O-Al.

III-2. Préparation des compositions

Les compositions testées ci-après sont préparées comme suit : on introduit l'élastomère diénique (ou mélange d'élastomères diéniques, le cas échéant) dans un mélangeur interne rempli à 70 à 75%, dont la température initiale de cuve est d'environ 90°C ; puis, après un temps approprié de malaxage, par exemple de l'ordre de 1 min, on ajoute tous les autres ingrédients, y compris la charge et l'agent de couplage associé, à l'exception du système de vulcanisation. On conduit alors un travail thermomécanique d'une durée de 12 min environ, avec une vitesse moyenne des palettes de 70 tours/min, jusqu'à obtenir une température de tombée d'environ 160°C.

On récupère le mélange ainsi obtenu, on le refroidit puis on ajoute le système de vulcanisation (soufre et accélérateur primaire type sulfénamide) sur un mélangeur externe (homo-finisseur) à 30°C, en mélangeant le tout (phase productive) pendant un temps approprié (par exemple 8 min environ).

Les compositions ainsi obtenues sont ensuite calandrées soit sous la forme de plaques (épaisseur de 2 à 3 mm) de caoutchouc pour la mesure de leurs propriétés mécaniques, soit extrudées sous la forme de bandes de roulement de pneumatiques. La vulcanisation (cuisson) est effectuée à 150°C pendant 40 min, sous pression.

Dans les essais qui suivent, l'hydroxyde métallique renforçant est utilisé à un taux préférentiel supérieur à 50 pce ; il constitue en outre la totalité ou tout au moins plus de 90% en poids de la totalité de la charge renforçante, une fraction minoritaire (moins de 10%) de cette dernière étant constituée par du noir de carbone.

III-3. Essais

Le but premier de cet essai est de démontrer la supériorité d'un hydroxyde métallique renforçant tel que décrit précédemment, comparativement notamment à une silice conventionnelle HDS, du point de vue de la cinétique de cuisson.

On compare pour cela quatre compositions utilisées pour la fabrication de bandes de roulement. L'élastomère diénique est un SBR préparé en solution (SSBR), comportant 25% en masse de styrène, les motifs polybutadiène présents étant pour 40% des motifs polybutadiènes-1,2 et pour 60% des motifs polybutadiène-1,4 trans (Tg = -38°C).

Ces quatre compositions sont sensiblement identiques à la nature près de la charge utilisée :

- composition C-1 : charge A (silice) ;
- composition C-2 : charge B (AlOOH) ;
- composition C-3 : mélange (50/50 en volume) charge A + charge B ;
- composition C-4 : charge C (charge B recouverte de silice).

Seule la composition C-4 est donc conforme à l'invention.

La silice HDS (charge A) choisie pour la composition témoin C-1 est une silice de grade pneumatique présentant de manière connue un très haut pouvoir renforçant ("Zeosil" type "1165MP" de la société Rhodia), utilisée habituellement pour renforcer des bandes de roulement de pneumatiques tourisme à faible consommation d'énergie.

Dans ces différents compositions, l'agent de couplage TESPT a été introduit à un taux de couverture surfacique sensiblement équivalent, en prenant en compte les différences de densité et de surface BET des charges utilisées, par rapport à la silice de la composition témoin C-1.

Les tableaux 2 et 3 donnent successivement la formulation des différentes compositions (tableau 2 - taux des différents produits exprimés en pce), leurs propriétés avant et après cuisson à 150°C pendant 40 min (tableau 3).

A la lecture des résultats du tableau 3, on constate que la composition C-4 selon l'invention, comparée à la composition témoin C-1, se caractérise tout d'abord par un rapport de modules (M300/M100) qui est très voisin, par une hystérèse ($\tan(\delta)_{max}$) légèrement inférieure (donc meilleure), autant d'indices de renforcement connus de l'homme du métier qui attestent du pouvoir renforçant de la charge C (hydroxyde métallique recouvert de silice).

Tel n'est pas le cas pour la charge B (hydroxyde métallique brut, non recouvert de silice) de la composition C-2 ni d'ailleurs pour le mélange de silice HDS et de charge B de la composition C-3 qui toutes deux montrent un rapport de modules (M300/M100) inférieur, une hystérèse ($\tan(\delta)_{max}$) nettement augmentée (donc moins bonne), comparativement à la solution témoin C-1.

Surtout, de manière surprenante, la composition de l'invention C-4 révèle une cinétique de vulcanisation (illustrée par le paramètre K) qui est augmentée de manière très sensible (facteur 2,6 environ) par rapport à la silice HDS (base 100 en unités relatives), ramenant ainsi cette dernière à celle usuellement rencontrée sur des compositions de caoutchouc équivalentes renforcées de noirs de carbone.

Par ailleurs, si le délai d'induction Ti des compositions C-2 et C-3 (1 min environ) est réduit d'une manière quasiment rédhibitoire du point de vue industriel, comparativement à la solution témoin (10 min), on constate que la composition C-4 de l'invention présente l'avantage notable et tout aussi inattendu de combiner, avec sa cinétique de cuisson (K) largement accélérée, une sécurité au grillage (Ti = 6,5 min) qui reste tout à fait acceptable du point de vue de la processabilité industrielle des compositions à l'état cru.

Ainsi, l'hydroxyde métallique renforçant précédemment décrit offre aux compositions de l'invention un compromis de propriétés avantageux et inattendu, propriétés que ne laissaient nullement présager, comme démontré dans les exemples précédents, les résultats obtenus jusqu'ici avec des hydroxydes métalliques, notamment avec des oxydes et/ou hydroxydes d'aluminium voire avec des mélanges de tels oxydes et/ou hydroxydes avec des silices HDS.

L'anisométrie préférentielle des particules d'hydroxyde métallique renforçant confère par ailleurs une anisotropie intéressante aux compositions de l'invention, aisément identifiable par comparaison des rigidités selon des tractions dans le sens du calandrage et dans le sens perpendiculaire au calandrage. Une telle anisotropie est avantageusement utilisable pour découpler les propriétés mécaniques des compositions, et donc ajuster la réponse de ces dernières aux modes de sollicitation spécifiques qui peuvent leur être appliqués.

Il était jusqu'ici généralement admis que des charges anisométriques étaient insuffisamment renforçantes, incapables du fait de leur taille relativement élevée de remplacer, dans une véritable fonction de charge renforçante, une charge conventionnelle pour pneumatique telle que du noir de carbone ou une silice HDS. Désormais, grâce à l'invention, il devient donc possible de combiner, avec une seule et même charge, renforcement et anisotropie de propriétés des compositions de caoutchouc.

**Tableau 1**

| charge : | A | B | C |
|---|---|---|---|
| densité He ($g/cm^3$) | 2.15 | 2.84 | 2.65 |
| surface BET ($m^2/g$) | 155 | 147 | 176 |
| surface BET ($m^2/cm^3$) | 333 | 417 | 466 |

**Tableau 2**

| Composition N°: | C-1 | C-2 | C-3 | C-4 |
|---|---|---|---|---|
| SSBR (1) | 100 | 100 | 100 | 100 |
| charge A | 52.5 | - | 26.3 | - |
| charge B | - | 74 | 37.0 | |
| charge C | | | | 67 |
| agent de couplage (2) | 4.2 | 5.4 | 4.8 | 4.9 |
| noir de carbone (N234) | 2 | 2 | 2 | 2 |
| ZnO | 2.5 | 2.5 | 2.5 | 2.5 |
| acide stéarique | 2 | 2 | 2 | 2 |
| antioxydant (3) | 1.9 | 1.9 | 1.9 | 1.9 |
| soufre | 1.5 | 1.5 | 1.5 | 1.5 |
| accélérateur (4) | 2.5 | 2.5 | 2.5 | 2.5 |
| (1) SBR solution;<br>(2) TESPT ("Si69" de la société DEGUSSA-HÜLS) ;<br>(3) N-1,3 diméthylbutyl N-phénylparaphénylènediamine ("Santoflex 6-PPD" de la société Flexsys) ;<br>(4) N-cyclohexyl-2-benzothiazylsulfénamide ("Santocure CBS" de la société Flexsys). | | | | |

**Tableau 3.**

| Composition N°: | C-1 | C-2 | C-3 | C-4 |
|---|---|---|---|---|
| M300/M100 | 3.0 | 2.5 | 2.5 | 2.8 |
| contrainte rupture (MPa) | 18.5 | 19.2 | 23.9 | 15.5 |
| allongement rupture (%) | 337 | 341 | 460 | 368 |
| Ti (min) | 10 | 0.9 | 1.3 | 6.4 |
| K ($min^{-1}$) | 0.098 | 0.172 | 0.168 | 0.259 |
| K (unités relatives) | 100 | 176 | 171 | 264 |
| $Tan(\delta)_{max}$ | 0.207 | 0.397 | 0.303 | 0.194 |

**Revendications**

1. Composition de caoutchouc à base d'au moins un élastomère diénique, une charge renforçante et un agent de couplage, **caractérisée en ce que** ladite charge comporte un hydroxyde métallique de synthèse recouvert de silice, le métal de l'hydroxyde étant choisi dans le groupe constitué par Al, Fe, Mg et les mélanges de ces métaux.

2. Composition selon la revendication 1, l'élastomère diénique étant choisi dans le groupe constitué par les polybutadiènes, les polyisoprènes de synthèse, le caoutchouc naturel, les copolymères de butadiène-styrène, les copolymères de butadiène-isoprène, les copolymères d'isoprène-styrène, les copolymères de butadiène-styrène-isoprène et les mélanges de ces élastomères.

**3.** Composition selon les revendications 1 ou 2, l'agent de couplage étant un silane ou un polysiloxane au moins bifonctionnel.

**4.** Composition selon l'une quelconque des revendications 1 à 3, le taux (% en poids) de silice de l'hydroxyde métallique représentant entre 5% et 50% du poids total de l'hydroxyde recouvert.

**5.** Composition selon la revendication 4, le taux de silice de l'hydroxyde métallique représentant entre 10% et 40% du poids total de l'hydroxyde recouvert.

**6.** Composition selon l'une quelconque des revendications 1 à 4, le taux d'hydroxyde métallique dans la composition étant supérieur à 50 pce.

**7.** Composition selon l'une quelconque des revendications 1 à 6, l'hydroxyde métallique comportant des agrégats (ou particules secondaires) de particules primaires, lesdits agrégats étant de forme anisométrique avec un rapport de forme ($F_1$=$L_1$/$E_1$) supérieur à 2 ($L_1$ représentant la longueur moyenne et $E_1$ l'épaisseur moyenne en nombre desdits agrégats).

**8.** Composition selon la revendication 7, le rapport de forme ($F_1$) des agrégats étant supérieur à 3.

**9.** Composition selon la revendication 8, le rapport de forme ($F_1$) des agrégats étant compris entre 3 et 10.

**10.** Composition selon l'une quelconque des revendications 1 à 9, l'hydroxyde métallique comportant des agrégats (ou particules secondaires) de particules primaires, lesdites particules primaires étant de forme anisométrique avec un rapport de forme ($F_2$=$L_2$/$E_2$) supérieur à 2 ($L_2$ représentant la longueur moyenne et $E_2$ l'épaisseur moyenne en nombre desdites particules primaires).

**11.** Composition selon la revendication 10, le rapport de forme ($F_2$) des particules primaires étant supérieur à 3.

**12.** Composition selon la revendication 11, le rapport de forme ($F_2$) des particules primaires étant compris entre 3 et 20.

**13.** Composition selon l'une quelconque des revendications 10 à 12, $L_2$ étant comprise entre 10 et 400 nm et $E_2$ étant comprise entre 5 et 25 nm.

**14.** Composition selon la revendication 13, $L_2$ étant comprise dans un domaine de 20 à 100 nm, et $E_2$ étant comprise dans un domaine de 10 à 20 nm.

**15.** Utilisation à titre de charge renforçante, dans une composition de caoutchouc diénique, d'un hydroxyde métallique de synthèse recouvert de silice, le métal de l'hydroxyde étant choisi dans le groupe constitué par Al, Fe, Mg et les mélanges de ces métaux.

**16.** Utilisation selon la revendication 15, le taux (% en poids) de silice de l'hydroxyde métallique représentant entre 5% et 50% du poids total de l'hydroxyde recouvert.

**17.** Utilisation selon la revendication 16, le taux de silice de l'hydroxyde métallique représentant entre 10% et 40% du poids total de l'hydroxyde recouvert.

**18.** Utilisation selon l'une quelconque des revendications 15 à 17, le taux d'hydroxyde métallique dans la composition de caoutchouc étant supérieur à 50 pce.

**19.** Utilisation selon l'une quelconque des revendications 15 à 18, l'hydroxyde métallique comportant des agrégats (ou particules secondaires) de particules primaires, lesdits agrégats étant de forme anisométrique avec un rapport de forme ($F_1$=$L_1$/$E_1$) supérieur à 2 ($L_1$ représentant la longueur moyenne et $E_1$ l'épaisseur moyenne en nombre desdits agrégats).

**20.** Utilisation selon la revendication 19, le rapport de forme ($F_1$) des agrégats étant supérieur à 3.

**21.** Utilisation selon la revendication 20, le rapport de forme ($F_1$) des agrégats étant compris entre 3 et 10.

**22.** Utilisation selon l'une quelconque des revendications 15 à 21, l'hydroxyde métallique comportant des agrégats (ou particules secondaires) de particules primaires, lesdites particules primaires étant de forme anisométrique avec un rapport de forme ($F_2$=$L_2$/$E_2$) supérieur à 2 ($L_2$ représentant la longueur moyenne et $E_2$ l'épaisseur moyenne en nombre desdites particules primaires).

**23.** Utilisation selon la revendication 22, le rapport de forme ($F_2$) des particules primaires étant supérieur à 3.

**24.** Utilisation selon la revendication 23, le rapport de forme ($F_2$) des particules primaires étant compris entre 3 et 20.

**25.** Utilisation selon l'une quelconque des revendications 22 à 24, $L_2$ étant comprise entre 10 et 400 nm et $E_2$ étant comprise entre 5 et 25 nm.

**26.** Utilisation selon la revendication 25, $L_2$ étant comprise dans un domaine de 20 à 100 nm, et $E_2$ étant comprise dans un domaine de 10 à 20 nm.

**27.** Procédé d'obtention d'une composition de caoutchouc diénique à cinétique de vulcanisation améliorée, utilisable pour la fabrication de pneumatiques, dans lequel on incorpore à au moins un élastomère diénique, au moins une charge renforçante et un agent de couplage, ce procédé étant **caractérisé en ce que** ladite charge comporte un hydroxyde métallique de synthèse recouvert de silice, le métal de l'hydroxyde étant choisi dans le groupe constitué par Al, Fe, Mg et les mélanges de ces métaux, et **en ce qu'**on malaxe thermomécaniquement le tout, en une ou plusieurs étapes, jusqu'à atteindre une température maximale comprise entre 110°C et 190°C.

**28.** Procédé selon la revendication 27, l'élastomère diénique étant choisi dans le groupe constitué par les polybutadiènes, les polyisoprènes de synthèse, le caoutchouc naturel, les copolymères de butadiène-styrène, les copolymères de butadiène-isoprène, les copolymères d'isoprène-styrène, les copolymères de butadiène-styrène-isoprène et les mélanges de ces élastomères.

**29.** Procédé selon les revendications 27 ou 28, l'agent de couplage étant un silane ou un polysiloxane au moins bifonctionnel.

**30.** Procédé selon l'une quelconque des revendications 27 à 29, le taux (% en poids) de silice de l'hydroxyde métallique représentant entre 5% et 50% du poids total de l'hydroxyde recouvert.

**31.** Procédé selon la revendication 30, le taux de silice de l'hydroxyde métallique représentant entre 10% et 40% du poids total de l'hydroxyde recouvert.

**32.** Procédé selon l'une quelconque des revendications 27 à 31, le taux d'hydroxyde métallique dans la composition étant supérieur à 50 pce.

**33.** Procédé selon l'une quelconque des revendications 27 à 32, l'hydroxyde métallique comportant des agrégats (ou particules secondaires) de particules primaires, lesdits agrégats étant de forme anisométrique avec un rapport de forme ($F_1$=$L_1$/$E_1$) supérieur à 2 ($L_1$ représentant la longueur moyenne et $E_1$ l'épaisseur moyenne en nombre desdits agrégats).

**34.** Procédé selon la revendication 33, le rapport de forme ($F_1$) des agrégats étant supérieur à 3.

**35.** Procédé selon la revendication 34, le rapport de forme ($F_1$) des agrégats étant compris entre 3 et 10.

**36.** Procédé selon l'une quelconque des revendications 27 à 35, l'hydroxyde métallique comportant des agrégats (ou particules secondaires) de particules primaires, lesdites particules primaires étant de forme anisométrique avec un rapport de forme ($F_2$=$L_2$/$E_2$) supérieur à 2 ($L_2$ représentant la longueur moyenne et $E_2$ l'épaisseur moyenne en nombre desdites particules primaires).

**37.** Procédé selon la revendication 36, le rapport de forme ($F_2$) des particules primaires étant supérieur à 3.

**38.** Procédé selon la revendication 37, le rapport de forme ($F_2$) des particules primaires étant compris entre 3 et 20.

**39.** Procédé selon l'une quelconque des revendications 36 à 38, $L_2$ étant comprise entre 10 et 400 nm et $E_2$ étant comprise entre 5 et 25 nm.

**40.** Procédé selon la revendication 39, $L_2$ étant comprise dans un domaine de 20 à 100 nm, et $E_2$ étant comprise dans un domaine de 10 à 20 nm.

**41.** Utilisation d'une composition selon l'une quelconque des revendications 1 à 14 pour la fabrication d'articles finis ou produits semi-finis en caoutchouc.

**42.** Article en caoutchouc comportant une composition selon l'une quelconque des revendications 1 à 14.

**43.** Pneumatique comportant une composition de caoutchouc selon l'une quelconque des revendications 1 à 14.

**44.** Bande de roulement de pneumatique comportant une composition de caoutchouc selon l'une quelconque des revendications 1 à 14.

## Claims

**1.** A rubber composition based on at least a diene elastomer, a reinforcing filler and a coupling agent, **characterised in that** said filler comprises a synthetic metal hydroxide covered with silica, the metal of the hydroxide being selected within the group consisting of Al, Fe, Mg and mixtures of these metals.

**2.** A composition according to Claim 1, the diene elastomer being selected within the group consisting of polybutadienes, synthetic polyisoprenes, natural rubber, butadiene/styrene copolymers, butadiene/isoprene copolymers, isoprene/styrene copolymers, butadiene/styrene/isoprene copolymers and mixtures of these elastomers.

**3.** A composition according to Claims 1 or 2, the coupling agent being a silane or a polysiloxane which is at least bifunctional.

**4.** A composition according to any one of Claims 1 to 3, the amount (% by weight) of silica of the metal hydroxide representing between 5% and 50% of the total weight of the covered hydroxide.

**5.** A composition according to Claim 4, the amount of silica of the metal hydroxide representing between 10% and 40% of the total weight of the covered hydroxide.

**6.** A composition according to any one of Claims 1 to 4, the amount of metal hydroxide in the composition being greater than 50 phr.

**7.** A composition according to any one of Claims 1 to 6, the metal hydroxide comprising aggregates (or secondary particles) of primary particles, said aggregates being of anisometric form with an aspect ratio ($F_1$=$L_1$/$E_1$) greater than 2 ($L_1$ representing the average length and $E_1$ the average thickness by number of said aggregates).

**8.** A composition according to Claim 7, the aspect ratio ($F_1$) of the aggregates being greater than 3.

**9.** A composition according to Claim 8, the aspect ratio ($F_1$) of the aggregates being between 3 and 10.

**10.** A composition according to any one of Claims 1 to 9, the metal hydroxide comprising aggregates (or secondary particles) of primary particles, said primary particles being of anisometric form with an aspect ratio ($F_2$=$L_2$/$E_2$) greater than 2 ($L_2$ representing the average length and $E_2$ the average thickness by number of said primary particles).

**11.** A composition according to Claim 10, the aspect ratio ($F_2$) of the primary particles being greater than 3.

**12.** A composition according to Claim 11, the aspect ratio ($F_2$) of the primary particles being between 3 and 20.

**13.** A composition according to any one of Claims 10 to 12, $L_2$ being between 10 and 400 nm, and $E_2$ being between

5 and 25 nm.

**14.** A composition according to Claim 13, $L_2$ lying within a range from 20 to 100 nm, and $E_2$ lying within a range from 10 to 20 nm.

**15.** The use as a reinforcing filler, in a diene rubber composition, of a synthetic metal hydroxide covered with silica, the metal of the hydroxide being selected from the group consisting of Al, Fe, Mg and mixtures of these metals.

**16.** The use according to Claim 15, the amount (% by weight) of silica of the metal hydroxide representing between 5% and 50% of the total weight of the covered hydroxide.

**17.** The use according to Claim 16, the amount of silica of the metal hydroxide representing between 10% and 40% of the total weight of the covered hydroxide.

**18.** The use according to any one of Claims 15 to 17, the amount of metal hydroxide in the rubber composition being greater than 50 phr.

**19.** The use according to any one of Claims 15 to 18, the metal hydroxide comprising aggregates (or secondary particles) of primary particles, said aggregates being of anisometric form with an aspect ratio ($F_1 = L_1/E_1$) greater than 2 ($L_1$ representing the average length and $E_1$ the average thickness by number of said aggregates).

**20.** The use according to Claim 19, the aspect ratio ($F_1$) of the aggregates being greater than 3.

**21.** The use according to Claim 20, the aspect ratio ($F_1$) of the aggregates being between 3 and 10.

**22.** The use according to any one of Claims 15 to 21, the metal hydroxide comprising aggregates (or secondary particles) of primary particles, said primary particles being of anisometric form with an aspect ratio ($F_2 = L_2/E_2$) greater than 2 ($L_2$ representing the average length and $E_2$ the average thickness by number of said primary particles).

**23.** The use according to Claim 22, the aspect ratio ($F_2$) of the primary particles being greater than 3.

**24.** The use according to Claim 23, the aspect ratio ($F_2$) of the primary particles being between 3 and 20.

**25.** The use according to any one of Claims 22 to 24, $L_2$ being between 10 and 400 nm, and $E_2$ being between 5 and 25 nm.

**26.** The use according to Claim 25, $L_2$ lying within a range from 20 to 100 nm, and $E_2$ lying within a range from 10 to 20 nm.

**27.** A process for obtaining a diene rubber composition having improved vulcanisation kinetics, usable for the manufacture of tyres, in which there is incorporated in at least one diene elastomer, at least a reinforcing filler and a coupling agent, this process being **characterised in that** said filler comprises a synthetic metal hydroxide covered with silica, the metal of the hydroxide being selected from the group consisting of Al, Fe, Mg and mixtures of these metals, and **in that** the entire mixture is kneaded thermomechanically, in one or more stages, until a maximum temperature of between 110°C and 190°C is reached.

**28.** A process according to Claim 27, the diene elastomer being selected within the group consisting of polybutadienes, synthetic polyisoprenes, natural rubber, butadiene/styrene copolymers, butadiene/isoprene copolymers, isoprene/styrene copolymers, butadiene/styrene/isoprene copolymers and mixtures of these elastomers.

**29.** A process according to Claims 27 or 28, the coupling agent being a silane or a polysiloxane which is at least bifunctional.

**30.** A process according to any one of Claims 27 to 29, the amount (% by weight) of silica of the metal hydroxide representing between 5% and 50% of the total weight of the covered hydroxide.

**31.** A process according to Claim 30, the amount of silica of the metal hydroxide representing between 10% and 40% of the total weight of the covered hydroxide.

**32.** A process according to any one of Claims 27 to 31, the amount of metal hydroxide in the composition being greater

than 50 phr.

**33.** A process according to any one of Claims 27 to 32, the metal hydroxide comprising aggregates (or secondary particles) of primary particles, said aggregates being of anisometric form with an aspect ratio ($F_1 = L_1/E_1$) greater than 2 ($L_1$ representing the average length and $E_1$ the average thickness by number of said aggregates).

**34.** A process according to Claim 33, the aspect ratio ($F_1$) of the aggregates being greater than 3.

**35.** A process according to Claim 34, the aspect ratio ($F_1$) of the aggregates being between 3 and 10.

**36.** A process according ,to any one of Claims 27 to 35, the metal hydroxide comprising aggregates (or secondary particles) of primary particles, said primary particles being of anisometric form with an aspect ratio ($F_2 = L_2/E_2$) greater than 2 ($L_2$ representing the average length and $E_2$ the average thickness by number of said primary particles).

**37.** A process according to Claim 36, the aspect ratio ($F_2$) of the primary particles being greater than 3.

**38.** A process according to Claim 37, the aspect ratio ($F_2$) of the primary particles being between 3 and 20.

**39.** A process according to any one of Claims 36 to 38, $L_2$ being between 10 and 400 nm, and $E_2$ being between 5 and 25 nm.

**40.** A process according to Claim 39, $L_2$ lying within a range from 20 to 100 nm, and $E_2$ lying within a range from 10 to 20 nm.

**41.** The use of a composition according to any one of Claims 1 to 14 for the manufacture of finished articles or semi-finished products made of rubber.

**42.** A rubber article comprising a composition according to any one of Claims 1 to 14.

**43.** A tyre comprising a rubber composition according to any one of Claims 1 to 14.

**44.** A tyre tread comprising a rubber composition according to any one of Claims 1 to 14.

**Patentansprüche**

**1.** Kautschukzusammensetzung auf Basis mindestens eines Dienelastomers, eines verstärkenden Füllstoffs und eines Kupplungsmittels, **dadurch gekennzeichnet, dass** der Füllstoff ein synthetisches Metallhydroxid umfasst, das mit Siliciumdioxid überzogen ist, wobei das Metall des Hydroxids aus der Gruppe, bestehend aus Al, Fe, Mg und Mischungen dieser Metalle ausgewählt ist.

**2.** Zusammensetzung nach Anspruch 1, wobei das Dienelastomer aus der Gruppe, bestehend aus Polybutadienen, synthetischen Polyisoprenen, Naturkautschuk, Butadien-Styrol-Copolymeren, Butadien-Isopren-Copolymeren, Isopren-Styrol-Copolymeren, Butadien-Styrol-Isopren-Copolymeren und Mischungen dieser Elastomere ausgewählt ist.

**3.** Zusammensetzung nach Anspruch 1 oder 2, wobei das Kupplungsmittel ein Silan oder ein Polysiloxan ist, das mindestens bifunktionell ist.

**4.** Zusammensetzung nach einem der Ansprüche 1 bis 3, wobei die Menge (Gew.-%) an Siliciumdioxid des Metallhydroxids zwischen 5 % und 50 % des Gesamtgewichts des überzogenen Hydroxids darstellt.

**5.** Zusammensetzung nach Anspruch 4, wobei die Menge an Siliciumdioxid des Metallhydroxids zwischen 10 % und 40 % des Gesamtgewichts des überzogenen Hydroxids darstellt.

**6.** Zusammensetzung nach einem der Ansprüche 1 bis 4, wobei die Menge an Metallhydroxid in der Zusammensetzung größer als 50 phr ist.

**7.** Zusammensetzung nach einem der Ansprüche 1 bis 6, wobei das Metallhydroxid Aggregate (oder Sekundärteilchen)

von Primärteilchen umfasst, wobei die Aggregate anisometrische Form haben, mit einem Längen-Breiten-Verhältnis ($F_1 = L_1/E_1$) größer als 2, (wobei $L_1$ zahlenmäßig die mittlere Länge und $E_1$ die mittlere Dicke der Aggregate ist).

**8.** Zusammensetzung nach Anspruch 7, wobei das Längen-Breiten-Verhältnis ($F_1$) der Aggregate größer als 3 ist.

**9.** Zusammensetzung nach Anspruch 8, wobei das Längen-Breiten-Verhältnis ($F_1$) der Aggregate zwischen 3 und 10 liegt.

**10.** Zusammensetzung nach einem der Ansprüche 1 bis 9, wobei das Metallhydroxid Aggregate (oder Sekundärteilchen) von Primärteilchen umfasst, wobei die Primärteilchen anisometrische Form haben, mit einem Längen-Breiten-Verhältnis ($F_2 = L_2/E_2$) größer als 2, (wobei $L_2$ zahlenmäßig die mittlere Länge und $E_2$ die mittlere Dicke der Primärteilchen ist).

**11.** Zusammensetzung nach Anspruch 10, wobei das Längen-Breiten-Verhältnis ($F_2$) der Primärteilchen größer als 3 ist.

**12.** Zusammensetzung nach Anspruch 11, wobei das Längen-Breiten-Verhältnis ($F_2$) der Primärteilchen zwischen 3 und 20 liegt.

**13.** Zusammensetzung nach einem der Ansprüche 10 bis 12, wobei $L_2$ zwischen 10 und 400 nm und $E_2$ zwischen 5 und 25 nm liegt.

**14.** Zusammensetzung nach Anspruch 13, wobei $L_2$ im Bereich von 20 bis 100 nm, und $E_2$ im Bereich von 10 bis 20 nm liegt.

**15.** Verwendung eines synthetischen Metallhydroxids, das mit Siliciumdioxid überzogen ist, als verstärkender Füllstoff in einer Dienkautschukzusammensetzung, wobei das Metall des Hydroxids aus der Gruppe, bestehend aus Al, Fe, Mg und den Mischungen dieser Metalle ausgewählt ist.

**16.** Verwendung nach Anspruch 15, wobei die Menge (in Gew.-%) an Siliciumdioxid des Metallhydroxids zwischen 5 % und 50 % des Gesamtgewichts des überzogenen Hydroxids darstellt.

**17.** Verwendung nach Anspruch 16, wobei die Menge an Siliciumdioxid des Metallhydroxids zwischen 10 % und 40 % des Gesamtgewichts des überzogenen Hydroxids darstellt.

**18.** Zusammensetzung nach einem der Ansprüche 15 bis 17, wobei die Menge an Metallhydroxid in der Kautschukzusammensetzung größer als 50 phr ist.

**19.** Verwendung nach einem der Ansprüche 15 bis 18, wobei das Metallhydroxid Aggregate (oder Sekundärteilchen) von Primärteilchen umfasst, wobei die Aggregate anisometrische Form haben, mit einem Längen-Breiten-Verhältnis ($F_1 = L_1/E_1$) größer als 2, (wobei $L_1$ zahlenmäßig die mittlere Länge und $E_1$ die mittlere Dicke der Aggregate ist).

**20.** Verwendung nach Anspruch 19, wobei das Längen-Breiten-Verhältnis ($F_1$) der Aggregate größer als 3 ist.

**21.** Verwendung nach Anspruch 20, wobei das Längen-Breiten-Verhältnis ($F_1$) der Aggregate zwischen 3 und 10 liegt.

**22.** Verwendung nach einem der Ansprüche 15 bis 21, wobei das Metallhydroxid Aggregate (oder Sekundärteilchen) von Primärteilchen umfasst, wobei die Primärteilchen anisometrische Form haben, mit einem Längen-Breiten-Verhältnis ($F_2 = L_2/E_2$) größer als 2, (wobei $L_2$ zahlenmäßig die mittlere Länge und $E_2$ die mittlere Dicke der Primärteilchen ist).

**23.** Verwendung nach Anspruch 22, wobei das Längen-Breiten-Verhältnis ($F_2$) der Primärteilchen größer als 3 ist.

**24.** Verwendung nach Anspruch 23, wobei das Längen-Breiten-Verhältnis ($F_2$) der Primärteilchen zwischen 3 und 20 liegt.

**25.** Verwendung nach einem der Ansprüche 22 bis 24, wobei $L_2$ zwischen 10 und 400 nm und $E_2$ zwischen 5 und 25 nm liegt.

**26.** Verwendung nach Anspruch 25, wobei $L_2$ im Bereich von 20 bis 100 nm, und $E_2$ im Bereich von 10 bis 20 nm liegt.

**27.** Verfahren zum Erhalten einer Dienkautschukzusammensetzung mit verbesserter Vulkanisationskinetik, das für die Fertigung von Reifen verwendbar ist, bei dem mindestens ein Dienelastomer, mindestens ein verstärkender Füllstoff und ein Kupplungsmittel inkorporiert wird, wobei dieses Verfahren **dadurch gekennzeichnet ist, dass** der Füllstoff ein synthetisches Metallhydroxid umfasst, das mit Siliciumdioxid überzogen ist, wobei das Metall des Hydroxids aus der Gruppe, bestehend aus Al, Fe, Mg und den Mischungen dieser Metalle ausgewählt ist, und **dadurch**, dass das Ganze in einem oder mehreren Schritten thermomechanisch geknetet wird, bis eine maximale Temperatur zwischen 110°C und 190 °C erreicht wird.

**28.** Verfahren nach Anspruch 27, wobei das Dienelastomer aus der Gruppe, bestehend aus Polybutadienen, synthetischen Polyisoprenen, Naturkautschuk, Butadien-Styrol-Copolymeren, Butadien-Isopren-Copolymeren, Isopren-Styrol-Copolymeren, Butadien-Styrol-Isopren-Copolymeren und Mischungen dieser Elastomere ausgewählt ist.

**29.** Verfahren nach Anspruch 27 oder 28, wobei das Kupplungsmittel ein Silan oder ein Polysiloxan ist, das mindestens bifunktionell ist.

**30.** Verfahren nach einem der Ansprüche 27 bis 29, wobei die Menge (Gew.-%) an Siliciumdioxid des Metallhydroxids zwischen 5 % und 50 % des Gesamtgewichts des überzogenen Hydroxids darstellt.

**31.** Verfahren nach Anspruch 30, wobei die Menge an Siliciumdioxid des Metallhydroxids zwischen 10 % und 40 % des Gesamtgewichts des überzogenen Hydroxids darstellt.

**32.** Verfahren nach einem der Ansprüche 27 bis 31, wobei die Menge an Metallhydroxid in der Zusammensetzung größer als 50 phr ist.

**33.** Verfahren nach einem der Ansprüche 27 bis 32, wobei das Metallhydroxid Aggregate (oder Sekundärteilchen) von Primärteilchen umfasst, wobei die Aggregate anisometrische Form haben, mit einem Längen-Breiten-Verhältnis ($F_1 = L_1/E_1$) größer als 2, (wobei $L_1$ zahlenmäßig die mittlere Länge und $E_1$ die mittlere Dicke der Aggregate ist).

**34.** Verfahren nach Anspruch 33, wobei das Längen-Breiten-Verhältnis ($F_1$) der Aggregate größer als 3 ist.

**35.** Verfahren nach Anspruch 34, wobei das Längen-Breiten-Verhältnis ($F_1$) der Aggregate zwischen 3 und 10 liegt.

**36.** Verfahren nach einem der Ansprüche 27 bis 35, wobei das Metallhydroxid Aggregate (oder Sekundärteilchen) von Primärteilchen umfasst, wobei die Primärteilchen anisometrische Form haben, mit einem Längen-Breiten-Verhältnis ($F_2 = L_2/E_2$) größer als 2, (wobei $L_2$ zahlenmäßig die mittlere Länge und $E_2$ die mittlere Dicke der Primärteilchen ist).

**37.** Verfahren nach Anspruch 36, wobei das Längen-Breiten-Verhältnis ($F_2$) der Primärteilchen größer als 3 ist.

**38.** Verfahren nach Anspruch 37, wobei das Längen-Breiten-Verhältnis ($F_2$) der Primärteilchen zwischen 3 und 20 liegt.

**39.** Verfahren nach einem der Ansprüche 36 bis 38, wobei $L_2$ zwischen 10 und 400 nm und $E_2$ zwischen 5 und 25 nm liegt.

**40.** Verfahren nach Anspruch 39, wobei $L_2$ im Bereich von 20 bis 100 nm, und $E_2$ im Bereich von 10 bis 20 nm liegt.

**41.** Verwendung einer Zusammensetzung nach einem der Ansprüche 1 bis 14 zur Fertigung von Fertigwaren oder Halbfertigerzeugnissen aus Kautschuk.

**42.** Gegenstand aus Kautschuk, der eine Zusammensetzung nach einem der Ansprüche 1 bis 14 umfasst.

**43.** Reifen, der eine Kautschukzusammensetzung nach einem der Ansprüche 1 bis 14 umfasst.

**44.** Reifenlauffläche, die eine Kautschukzusammensetzung nach einem der Ansprüche 1 bis 14 umfasst.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9928376 A
- WO 9928380 A
- WO 0073372 A
- WO 0073373 A
- EP 0407262 A
- WO 0005312 A
- US 3842111 A
- US 3873489 A
- US 3978103 A
- US 3997581 A
- US 4002594 A
- US 4072701 A
- US 4129585 A
- US 5580919 A
- US 5583245 A
- US 5650457 A
- US 5663358 A
- US 5663395 A
- US 5663396 A
- US 5674932 A
- US 5675014 A
- US 5684171 A
- US 5684172 A
- US 5696197 A
- US 5708053 A
- US 5892085 A
- WO 02083782 A
- WO 9902602 A
- WO 0196442 A
- WO 0230939 A
- WO 0231041 A
- WO 0210269 A


### Littérature non-brevet citée dans la description


- **BRUNAUER-EMMETT-TELLER.** *The Journal of the American Chemical Society,* Février 1938, vol. 60, 309
- **M.OHMORI ; E.MATIJEVIC.** *J. colloid inter. Sci.,* 1993, vol. 160, 288-292
- **W. STOEBER ; A. FINK ; E. BOHM.** *J. Colloid Inter. Sci.,* 1968, vol. 26, 62-69
- **C. KAYA et al.** Nanostructured ceramic powders by hydrothermal synthesis and their application. *Microporous and Mesoporous Materials,* 2002, vol. 54, 37-49